# EUROPÄISCHE PATENTSCHRIFT

(11) **EP 2 181 032 B1**
(45) Veröffentlichungstag und Bekanntmachung des Hinweises auf die Patenterteilung: **20.07.2011**
(21) Anmeldenummer: 08782828.1
(22) Anmeldetag: 25.08.2008
(51) Int. Cl.: B62D 7/14

(54) **LENKERANORDNUNG FÜR FAHRZEUGE**
STEERING ARRANGEMENT FOR VEHICLES
SYSTÈME DE BRAQUAGE POUR VÉHICULES

(30) Priorität: 24.08.2007 AT 13262007
(43) Veröffentlichungstag der Anmeldung: 05.05.2010
(73) Patentinhaber: Sandvik Mining and Construction G.m.b.H., 8740 Zeltweg (AT)
(72) Erfinder: KRIVEK, Eduard, A-8740 Zeltweg (AT); GROSS, Thomas, A-8740 Zeltweg (AT)
(74) Vertreter: Haffner und Keschmann Patentanwälte OG
(86) Internationale Anmeldenummer: PCT/AT2008/000300
(87) Internationale Veröffentlichungsnummer: WO 2009/026601

(56) Entgegenhaltungen:
- BE-A- 415 780
- GB-A- 1 495 049
- SU-A1- 1 118 574

## Beschreibung

Die Erfindung bezieht sich auf eine Lenkeranordnung für Fahrzeuge, insbesondere untertägige Transportfahrzeuge, mit wenigstens vier lenkbaren Rädern, wobei bei Kurvenfahrt ein jeweils kurveninneres Rad stärker eingeschlagen wird als das jeweils kurvenäußeren Rad, wobei wenigstens zwei einander bezüglich der Fahrzeuglängsmittelebene gegenüberliegende Räder über Winkelhebel und eine an die Winkelhebel angeschlossene Spurstange miteinander gekoppelt sind, dass in Fahrzeuglängsrichtung hintereinander liegende, kurveninnere oder kurvenäußere Räder über ein Getriebe zu einer gemeinsamen Schwenkbewegung gekoppelt sind und die Winkelhebel mit einem Lenkhebel verbunden sind, der über eine Lenkstange mit jeweils einem lenkbaren Rad verbunden ist.

Die GB 1495049 beschreibt eine Lenkeranordnung der eingangs genannten Art.

Untertägige Tranaportfahrzeuge, und insbesondere so genannten "shuttle cars", werden nur mit mechanischen Lenksystemen eingesetzt, wobei in aller Regel eine optimale Lenkgeometrie nach dem Ackermann-Lenkprinzip nicht vollständig erreichbar ist. Das Ackermann-Lenkprinzip definiert eine optimale Lenkgeometrie derart, dass sich die Verlängerung aller Radachsen bei der Kurvenfahrt jeweils in einem gemeinsamen Kurvenmittelpunkt treffen. Auf Grund dieser geometrischen Überlegungen ergibt sich, dass die kurveninneren Räder stärker eingeschlagen werden müssen als die kurvenäußeren Räder, um sicher zu stellen, dass bei der Kurvenfahrt kein übermäßiger Abrieb und Verschleiß der Reifen beobachtet wird.

Ein mechanischer Steuerungsmechanismus für ein Shuttle Car ist der US 2 590 300 zu entnehmen. Bei dieser bekannten Ausbildung sind einzeln angetriebene Räder über einen Gelenkmechanismus miteinander verbunden, wobei eine starre Welle für die Kopplung der Lenkgetriebe zu beiden Seiten des Fahrzeuges verwendet wird. Es sind Lenkgetriebe vorgesehen, welche einen entsprechenden gegengleichen Lenkeinschlag für die Kurvenfahrt sicherstellen sollen, wobei die an diese Lenkgetriebe angekoppelten Steuerstangen kreuzweise versetzt angeordnet sind und einander zentrisch gegenüberliegende Steuerstangen jeweils gleiche Länge und in Fahrzeuglängsrichtung hintereinander liegende Stangen unterschiedliche Länge aufweisen. Die Lagerung der Lenkgetriebe und die Angriffspunkte für die angekoppelten Lenkstangen sind jeweils in unterschiedlicher Höhe angeordnet und ermöglichen einen geringen Ausgleich des Einschlagwinkels der inneren Räder zu den äußeren Rädern.

Trotz aufwendiger Hebelmechanismen wird aber ein Lenkwinkelausgleich zwischen den inneren und äußeren Rädern in Übereinstimmung mit dem Ackermann-Lenkprinzip nur unzureichend verwirklicht, sodass immer noch bei den im Untertagebetriebe vorherrschenden Bodenverhältnissen ein sehr starker Reifenabrieb beobachtet wird.

Die Erfindung zielt nun darauf ab, eine Lenkeranordnung der eingangs genannten Art zu schaffen, mit welcher für den Einsatz als Untertagefahrzeug das Ackermann-Lenkprinzip besser erfüllt wird, sodass eine Verringerung des Reifenabriebes erreicht wird. Zur Lösung dieser Aufgabe besteht die erfindungsgemäße Ausbildung ausgehend von der eingangs genannten Lenkeranordnung im Wesentlichen darin, dass die Winkelhebel jeweils über eine Koppelstange mit einem Winkelhebel verbunden sind. Abweichend von der aus der US 2590300 bekannten Ausbildung, bei welcher zur Kopplung der beiden Lenksysteme zu beiden Seiten des Fahrzeuges eine gemeinsame Welle vorgesehen war, wird nun die Kopplung des kurveninneren mit dem kurvenäußeren Lenksystem nicht mehr durch die starre verbindungsvolle sondern durch ein Gelenksystem erzielt. Dieses Gelenksystem besteht aus der Spurstange und den Winkelhebeln" wobei die Verwendung dieses Gelenksystems eine Verbindung zwischen den beiden Lenksystemen ermöglicht, bei welcher durch die Hebelübersetzungen, durch die jeweilige Opurstangenlänge und die geometrische Anordnung der Hebel eine optimale Einstellung des Differenzwinkels zwischen den inneren und äußeren Rädern bei der Kurvenfahrt gelingt.

Die bevorzugte Dimensionierung sieht in diesem Zusammenhang vor, dass die Länge der Spurstange dem 0,3 bis 0,7-fachen, vorzugsweise der Hälfte der Spurweite der Räder entspricht, wobei eine derartige Ausbildung einen weitestgehend symmetrischen Aufbau der Lenkmechanismen zu beiden Seiten des Transportfahrzeuges erlaubt. Der Winkelausgleich zu den inneren und äußeren Rädern wird hierbei durch die Länge der Spurstange wesentlich beeinflusst, wobei es sich gezeigt hat, dass kürzere Spurstangen die günstigere Geometrie ergeben. Bei zu kurzer Spurstange wirken jedoch auf die Winkelhebel auf Grund wesentlich kleinerer Hebelarme große Lagerkräfte, sodass mit der vorgeschlagenen Bemessung der Spurstange ein optimales Verhältnis erreicht wird.

Die Lenkeranordnung der Erfindung kommt bevorzugt mit einer einzigen Spurstange für alle vier Räder aus.

Die Übertragung der gewünschten Bewegung auf die einzelnen Räder erfolgt erfindungsgemäß so, dass die an die Spurstange angeschlossenen Winkelhebel jeweils über eine Koppelstange mit einem Lenkhebel verbunden sind, der über eine Lenkstange mit jeweils einem lenkbaren Rad verbunden ist. Dabei kann die Lenkcharakteristik beeinflusst werden, wobei die geeignete Dimensionierung und geometrische Anordnung des Lenkhebels für die gewünschte Lenkwinkelübersetzung sowie ggf. auch für den gewünschten Verlauf der Lenkwinkelübersetzung in Abhängigkeit vom Lenkeinschlag sorgt. Bei korrekter Dimensionierung gelingt es, das Ackermann-Lenkprinzip weitestgehend exakt zu gewährleisten.

Die Ausbildung ist erfindungsgemäß in einer besonders einfachen Weise so getroffen, dass die Winkelhebel am Fahrzeugrahmen um quer zur Fahrzeuglängsrichtung verlaufende, vorzugsweise parallel zur Längsmittelebene verlaufende Achsen, schwenkbar gelagert sind.

Eine Verringerung der in den einzelnen Winkellagen bzw. Schwenklagen auf die Lager wirkenden Kräfte kann dadurch erzielt werden, dass die Schwenkachsen der Lenkhebel und die Schwenkachsen der mit der Spurstange verbundenen Winkelhebel einander unter einem Winkel von etwa 90° kreuzen, wobei eine vollständig symmetrische und damit eine weitestgehend kräfteneutrale Ausbildung dadurch erzielt werden kann, dass die Länge aller mit Lenkhebeln und lenkbaren Rädern verbundenen Lenkstangen etwa gleich lang ist.

Die Kopplung der in Fahrzeuglängsrichtung hintereinander liegenden, kurveninneren oder kurvenäußeren Räder zu einer gemeinsamen Schwenkbewegung erfolgt bevorzugt derart, dass jeweils zwei Lenkhebel für in Fahrzeuglängsrichtung hintereinander liegende Räder vorgesehen sind, welche zu gegensinniger Verschwenkung gekoppelt sind.

Die gewünschte gegenläufige bzw. gegensinnige Verschwenkung benachbarter Räder einer Seite des Fahrzeuges kann in einfacher weise dadurch erzielt werden, dass einander benachbarte Lenkhebel über eine Koppelstange zu gegenläufiger Verschwenkung verbunden sind, wobei die Koppelstange an einem Lenkhebel an dem mit der Lenkstange verbundenen und an dem benachbarten Lenkhebel an einem der Anlenkstelle der Lenkstange abgewandten Hebelarm angreift, wobei in besonders einfacher Weise der Lenkantrieb an einem der Lenkhebel angreift.

Durch den erfindungsgemäßen vorgesehenen weitestgehend symmetrischen Aufbau des Lenksystems werden im Wesentlichen für alle Räderpaare gleich große Lenkkräfte erzielt, wobei in der Neutralstellung der Lenkhebel zur Erzielung der günstigsten Angriffspunkte jeweils nach innen geneigt sein sollte. Ein von hydraulischen Zylinderkolbenaggregaten gebildeter Lenkantrieb kann jeweils zum Kräfteausgleich der Flächenverhältnisse im Kolbenraum und im Stangenraum zu beiden Seiten der Aggregate mit unterschiedlichem Druck beaufschlagt sein, um auch hier eine Kompensation und damit gleiche Kräfte zu erzielen.

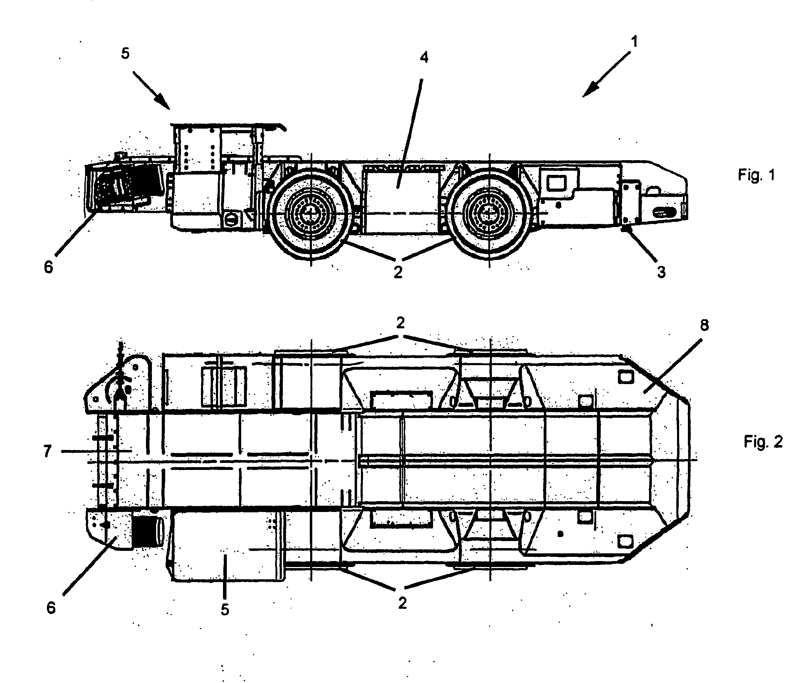

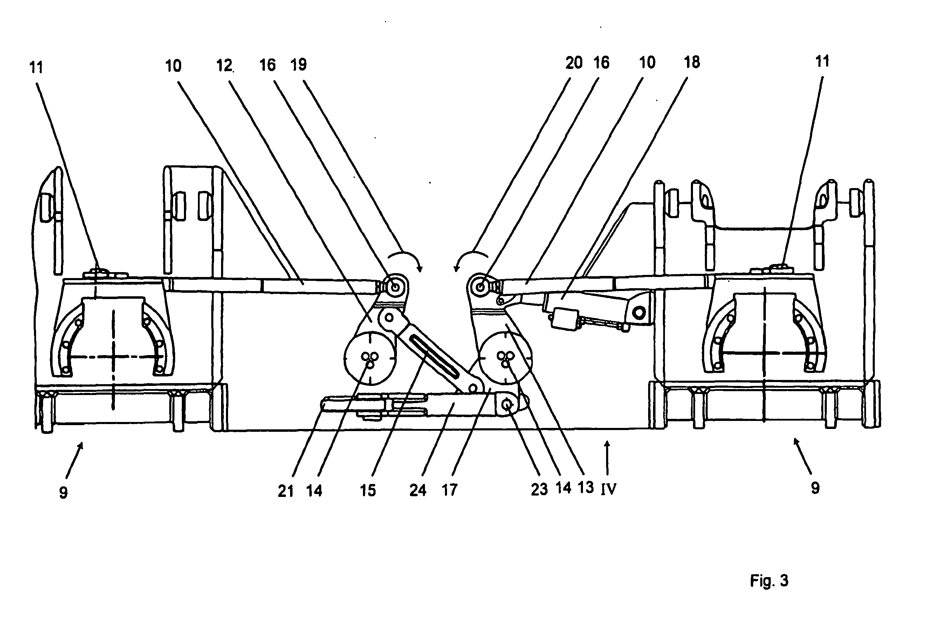

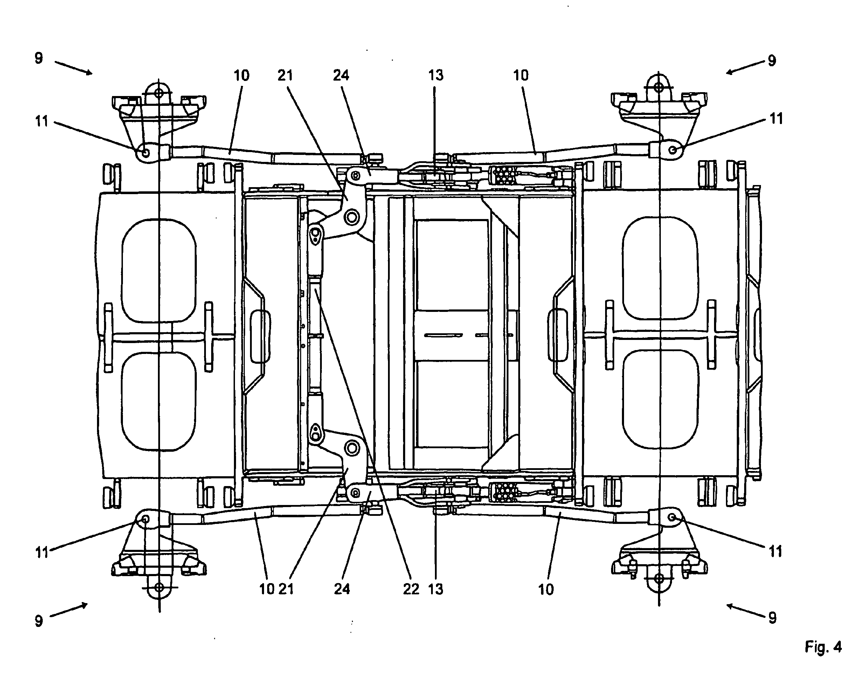

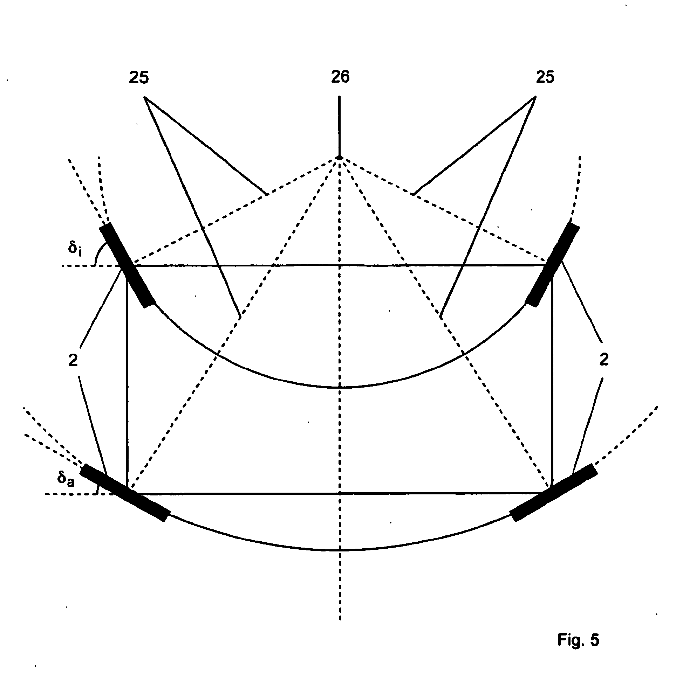

Die Erfindung wird nachfolgend anhand eines in der Zeichnung schematisch dargestellten Ausführungsbeispieles näher erläutert. In dieser zeigt Figur 1 eine Seitenansicht eines mit der erfindungsgemäßen Lenkeranordnung ausgestatteten Fahrzeuges, Figur 2 eine Draufsicht auf die Darstellung auf Figur 1, Figur 3 eine Seitenansicht der für die Lenkung der Räder einerseits vorgesehenen Hebeln und Stangen, Figur 4 eine Ansicht in Richtung des Pfeils IV der Figur 3, und Figur 5 eine schematische Darstellung des Ackermann-Lenkprinzips.

In Figur 1 ist ein Transportfahrzeug 1 ersichtlich, dessen angetriebene Räder mit 2 bezeichnet sind. Nahe dem Vorderende des Transportfahrzeuges 1 ist eine mit 3 angedeutete Wagenhebevorrichtung ersichtlich. Mit 4 ist ein Teil der Energieversorgung und insbesondere ein Elektrokasten bezeichnet. Neben einer Fahrerkabine 5 sind noch Teile 6 des Antriebes für eine Förderkette oder ein Förderband ersichtlich, welches in Figur 2 mit 7 bezeichnet wird. Die Aufgabe des Materials erfolgt über eine in Figur 2 ersichtliche Aufgabeschurre 8.

In Figur 3 sind jeweils Tragkonstruktionen 9 für die Räder 2, sowie Teile des die Lenkung bewirkenden Lenkgetriebes ersichtlich. Neben Lenkstangen 10, welche exzentrisch an Lagerstellen 11 der Radaufhängung angreifen, sind in Figur 3 vor allen Dingen die Lenkhebel 12 und 13 ersichtlich. Der Lenkhebel 12 ist jeweils als einarmiger Hebel ausgebildet und um eine Achse 14 schwenkbar. Mit 15 ist eine Koppelstange bezeichnet, welche am Lenkhebel 12 benachbart der Anlenkstelle 16 für die Lenkstange angreift. Am benachbarten Lenkhebel 13, welcher als zweiarmiger Hebel ausgebildet ist, greift diese Koppelstange 15 an dem der Anlenkstelle 16 für die Lenkstange 10 gegenüber liegenden Hebelarm 17 an, wobei mit 14 wiederum die Schwenkachse bezeichnet ist. Position 18 bezeichnet hier einen Teil des Lenkantriebes, welcher an dem Lenkhebel 13 angreift.

Durch die Koppelstange 15 wird erreicht, dass bei einer Verschwenkung des Lenkhebels 12 in Richtung des Pfeils 19 eine Verschwenkung des Lenkhebels 13 in Gegenrichtung, d.h. in Richtung des Pfeils 20 erfolgt, sodass die beiden Räder gegensinnig verschwenkt werden. Unterhalb der Schwenkachsen 14 der Lenkhebel ist mit 21 ein Winkelhebel bezeichnet, wobei sich die Details dieser Kopplung aus Figur 4 deutlich ergeben. Die Winkelhebel 21 greifen mit ihren jeweils einwärts ragenden Armen an einer Spurstange 22 an, die selbst so bemessen ist, dass sie etwa halb so lang ist wie die Spurweite, das heißt der Abstand zwischen den Radaufhängungen 9 zu beiden Seiten des Fahrzeuges.

Die Winkelhebel 21 greifen, wie in Figur 3 ersichtlich, über eine Koppelstange 24 an der Anlenkstelle 23 des Lenkhebels 13 an, wobei durch die beiden Winkelhebel 21 die entsprechende Kopplung der beiden Lenkantriebe zu beiden Seiten des Fahrzeuges erfolgt. Durch die über die Winkelhebel 21 und die Spurstange 22 definierte Geometrie wird nun eine Verschwenkung derart ermöglicht, dass die Räder 2 auf der jeweils kurveninneren Seite stärker eingeschlagen werden als die Räder 2 der jeweils kurvenäußeren Seite.

Das entsprechende Lenkprinzip wird in Figur 5 verdeutlicht, die Achsen der Räder 2 sind hierbei jeweils mit 25 bezeichnet, wobei in der in Figur 5 dargestellten Kurvenfahrt entsprechend dem Ackermann-Lenkprinzip diese Achsen 25 einander in einem Punkt 26 treffen. Auf Grund dieses Umstandes ergibt sich, dass der Einschlagwinkel δi der inneren Räder 2 größer sein muss als der Einschlagwinkel δa der kurvenäußeren Räder 2, um der geometrischen Bedingung zu genügen, dass die verlängerten Achsen einander in einem gemeinsamen Punkt 26 schneiden oder kreuzen.

## Patentansprüche

1. Lenkeranordnung für Fahrzeuge, insbesondere untertägige Transportfahrzeuge, mit wenigstens vier lenkbaren Rädern, wobei bei Kurvenfahrt ein jeweils kurveninneres Rad stärker eingeschlagen wird als das jeweils kurvenäußere Rad, wobei wenigstens zwei einander bezüglich der Fahrzeuglängsmittelebene gegenüberliegende Räder über Winkelhebel und eine an die Winkelhebel angeschlossene Spurstange miteinander gekoppelt sind, dass in Fahrzeuglängsrichtung hintereinander liegende, kurveninnere oder kurvenäußere Räder über ein Getriebe zu einer gemeinsamen Schwenkbewegung gekoppelt sind und die Winkelhebel mit einem Lenkhebel verbunden sind, der über eine Lenkstange mit jeweils einem lenkbaren Rad verbunden ist, **dadurch gekennzeichnet, dass** die Winkelhebel (21) jeweils über eine Koppelstange (24) mit einem Lenkhebel (13) verbunden sind.

2. Lenkeranordnung für Fahrzeuge nach Anspruch 1, **dadurch gekennzeichnet, dass** die Länge der Spurstange (22) dem 0,3 bis 0,7-fachen, vorzugsweise der Hälfte der Spurweite der Räder (2) entspricht.

3. Lenkeranordnung für Fahrzeuge nach Anspruch 1 oder 2, **dadurch gekennzeichnet, dass** die Winkelhebel (21) am Fahrzeugrahmen um quer zur Fahrzeuglängsrichtung verlaufende, vorzugsweise parallel zur Längsmittelebene verlaufende, Achsen schwenkbar gelagert sind.

4. Lenkeranordnung für Fahrzeuge nach einem der Ansprüche 1 bis 3, **dadurch gekennzeichnet, dass** jeweils zwei Lenkhebel (12,13) für in Fahrzeuglängsrichtung hintereinander liegende Räder (2) vorgesehen sind, welche zu gegensinniger verschwenkung gekoppelt sind.

5. Lenkeranordnung für Fahrzeuge nach einem der Ansprüche 1 bis 4, **dadurch gekennzeichnet, dass** die Schwenkachsen (14) der Lenkhebel (12,13) und die Schwenkachsen der mit der Spurstange (22) verbundenen Winkelhebel (21) einander unter einem Winkel von etwa 90° kreuzen.

6. Lenkeranordnung für Fahrzeuge nach einem der Ansprüche 1 bis 5, **dadurch gekennzeichnet, dass** die Länge aller mit Lenkhebeln (12,13) und lenkbaren Rädern (2) verbundenen Lenkstangen (10) etwa gleich lang ist.

7. Lenkeranordnung für Fahrzeuge nach einem der Ansprüche 1 bis 5, **dadurch gekennzeichnet, dass** der Lenkantrieb (18) an einem der Lenkhebel (12,13) angreift.

8. Lenkeranordnung für Fahrzeuge nach einem der Ansprüche 1 bis 7, **dadurch gekennzeichnet, dass** einander benachbarte Lenkhebel (12,13) über eine Koppelstange (15) zu gegenläufiger Verschwenkung verbunden sind, wobei die Koppelstange (15) an einem Lenkhebel (12) an dem mit der Lenkstange (10) verbundenen und an dem benachbarten Lenkhebel (13) an einem der Anlenkstelle (16) der Lenkstange (10) abgewandten Hebelarm (17) angreift.

## Claims

1. A steering arrangement for vehicles, in particular underground transport vehicles, including at least four steerable wheels, wherein, during cornering, a respective curve-inner wheel is turned more sharply than the respective curve-outer wheel, wherein at least two wheels located opposite each other in respect to the longitudinal center plane of the vehicle are coupled with each other via angle levers and a tie rod connected to the angle levers, that curve-inner or curve-outer wheels consecutively arranged in the longitudinal direction of the vehicle are coupled to common pivotal movement via a gear, and that the angle levers are each connected with a steering lever each connected with a steerable wheel via a steering rod, **characterized in that** the angle levers (21) are each connected with a steering lever (13) via a coupling rod (24).

2. A steering arrangement for vehicles according to claim 1, **characterized in that** the length of the tie rod (22) corresponds to 0.3 to 0.7 times, preferably half, the track width of the wheels (2).

3. A steering arrangement for vehicles according to claim 1 or 2, **characterized in that** the angle levers (21) are mounted on the vehicle frame so as to be pivotable about axes extending transversely to the longitudinal direction of the vehicle and, preferably, parallelly with the longitudinal central plane.

4. A steering arrangement for vehicles according to any one of claims 1 to 3, **characterized in that** two steering levers (12, 13) are each provided for wheels (2) consecutively arranged in the longitudinal direction of the vehicle, which are coupled to pivoting in opposite directions.

5. A steering arrangement for vehicles according to any one of claims 1 to 4, **characterized in that** the pivot axes (14) of the steering levers (12, 13) and the pivot axes of the angle levers (21) connected with the tie rod (22) intersect at an angle of about 90°

6. A steering arrangement for vehicles according to any one of claims 1 to 5, **characterized in that** the lengths of all the steeering rods (10) which are connected with steering levers (12, 13) and steerable wheels (2) are approximately equally long.

7. A steering arrangement for vehicles according to any one of claims 1 to 5, **characterized in that** the steering drive (18) engages a steering lever (12, 13).

8. A steering arrangement for vehicles according to any one of claims 1 to 7, **characterized in that** neighboring steering levers (12, 13) are connected to pivoting in opposite directions by a coupling rod (15), said coupling rod (15), on a steering lever (12), engaging the lever arm (17) connected with the steering rod (10) and, on the neighboring steering lever (13), engaging a lever arm (17) facing away from the articulation (16) of the steering rod (10).

## Revendications

1. Arrangement de guidage pour véhicules, en particulier véhicules de transport sous-sol, avec au moins quatre roues dirigeables, dans lequel en marche en virage une roue à l'intérieur du virage est tournée plus que la roue à l'extérieur du virage, dans lequel au moins deux roues, l'une étant disposée en face de l'autre relatif au plan longitudinal central du véhicule, sont couplées l'une à l'autre avec des jarrets et une bielle de direction couplée aux jarrets, dans lequel des roues à l'intérieur ou à l'extérieur du virage disposées affilée sont couplées l'une à l'autre par un engrenage pour un pivotement commun et les jarrets sont liés à un levier de guidage, le levier respectivement étant couplé par moyen d'une barre de guidage avec une roue dirigeable, **caractérisé en ce que** les jarrets (21) sont respectivement liés à un levier de guidage (13) par moyen d'une barre de couplage (24).

2. Arrangement de guidage pour véhicules selon la revendication 1, **caractérisé en ce que** la longueur de la bielle de direction (22) est de 0,3 fois à 0,7 fois, de préférence la moitié de l'écartement des roues (2).

3. Arrangement de guidage pour véhicules selon la revendication 1 ou 2, **caractérisé en ce que** les jarrets (21) sont reliés au châssis du véhicule de manière pivotant par moyen de axes s'étendants de manière transversale, de préférence de manière parallèle au plan longitudinal central.

4. Arrangement de guidage pour véhicules selon l'une quelconque des revendications 1 à 3, **caractérisé en ce que** à chaque fois il y sont prévus deux leviers de direction (12, 13) pour des roues (2) disposées affilée par rapport à la direction longitudinal du véhicule, les leviers étant couplés pour un pivotement opposé.

5. Arrangement de guidage pour véhicules selon l'une quelconque des revendications 1 à 4, **caractérisé en ce que** les axes de pivotement (14) des leviers de direction (12, 13) et les axes de pivotement des jarrets (21) couplés par moyen de la bielle de direction (22) se croisent avec un angle d'environ 90°.

6. Arrangement de guidage pour véhicules selon l'une quelconque des revendications 1 à 5, **caractérisé en ce que** la longueur de tous les barres de guidage (10) liés avec des leviers de guidage (12, 13) et avec des roues dirigeables (2) est environ égal.

7. Arrangement de guidage pour véhicules selon l'une quelconque des revendications 1 à 5, **caractérisé en ce que** l'entraînement de guidage (18) couple à un des leviers de guidage (12, 13).

8. Arrangement de guidage pour véhicules selon l'une quelconque des revendications 1 à 5, **caractérisé en ce que** des leviers de guidage (12, 13) voisins sont couplés l'un à l'autre pour un pivotement opposé par moyen d'une barre de couplage (15), la barre de couplage (15) couplant à un levier de guidage (12) au bras de levier (17) lié avec la barre de guidage (12) et couplant au levier de guidage (13) voisin à un bras de levier opposé au point de couplage (16) de la barre de guidage (10).
